# EUROPEAN PATENT APPLICATION

(11) **EP 4 693 949 A1**
(43) Date of publication of application: **11.02.2026**
(21) Application number: 24891672.8
(22) Date of filing: 24.10.2024
(51) Int. Cl.: H04B 10/079, H04B 10/114, H01M 10/42

(54) **METHOD FOR CHECKING COMMUNICATION STATE AND BATTERY MANAGEMENT SYSTEM FOR PERFORMING SAME**

(30) Priority: 15.11.2023 KR 20230158496
(71) Applicant: LG Energy Solution, Ltd., Seoul 07335 (KR)
(72) Inventor: KIM, Youngbeom, Daejeon 34122 (KR); JO, Yongmin, Daejeon 34122 (KR)
(74) Representative: Plasseraud IP
(86) International application number: PCT/KR2024/016268
(87) International publication number: WO 2025/105725

(57) **Abstract**

Disclosed are a method for checking a communication state of a battery management system communicating with an external battery management system, and a battery management system for performing same. The method comprises the steps of: receiving an optical signal having communication information transmitted from an external battery management system through a light receiving unit including a plurality of optical sensors arranged in a symmetrical structure around a reference point; identifying one or more optical sensors receiving the optical signal among the plurality of optical sensors; and checking a communication state with the external battery management system on the basis of the identification result.

## Description

### Technical Field

The present disclosure relates to a method of inspecting a communication status and a battery management system of operating the same.

### Background Art

The communication process between a battery management system and an external battery system is accomplished through the process of measuring the status of a battery module and exchanging control signals related to it. Here, the communication method mainly used is optical communication using light emitting devices such as photodiodes. Various studies are being conducted to diagnose the communication status between a battery management system and an external battery management system that are physically separated from each other, and to quickly and accurately identify solutions when communication is not smooth.

### Detailed Description of the Invention

### Technical Goals

The technical tasks to be achieved by the present example embodiments are not limited to the technical tasks described above, and other technical tasks may be inferred from the following example embodiments.

### Technical solutions

According to an example embodiment of the present disclosure, provided is a method of inspecting a communication status of a battery management system that communicates with an external battery management system, the method including receiving a light signal including communication information transmitted from the external battery management system through a light receiving part including a plurality of light sensors arranged in a symmetric structure having a reference point as a center, identifying one or more light sensors that receive the light signal among the plurality of light sensors, and inspecting a communication status with the external battery management system based on an identified result.

The inspecting the communication status may include, when the light signal is received from all of the plurality of light sensors, determining that the communication status of the battery management system and the external battery management system is normal status.

The inspecting the communication status may include, among the plurality of light sensors, when a signal is received from one or more light sensors less than the number of all of light sensors, and when an arrangement status of the one or more light sensors is symmetrical around the reference point, determining that a communication status between the battery management system and the external battery management system is a status that a signal intensity is poor.

The method of inspecting the communication status may further include transmitting control information including a notification on the communication status, wherein the control information may include information on adjusting light signal intensity between the battery management system and the external battery management system and information on adjusting a distance between the battery management system and the external battery management system.

The method of inspecting the communication status may include, when a signal is received from one or more light sensors among the plurality of light sensors, and when an arrangement status of the one or more light sensors is asymmetrical around the reference point, determining that a communication status between the battery management system and the external battery management system is a status that arrangement is poor.

The method of inspecting the communication status may include transmitting control information including a notification on the communication status, wherein the control information includes information on adjusting an angle between a light receiving part of the battery management system and a light emitting part of the external battery management system.

The method of inspecting the communication status may further include obtaining an average value for intensity values of light signals received from each of the one or more light sensors, and analyzing the communication information based on the average value.

The analyzing the communication information may include converting a type of the light signals from an analog signal type to a digital signal type.

According to an example embodiment of the present disclosure, provided is an electronic apparatus that performs a method of inspecting a communication status of a battery management system that communicates with an external battery management system, the electronic apparatus including a light receiving part configured to receive a light signal including communication information transmitted from the external battery management system through a plurality of light sensors arranged in a symmetric structure having a reference point as a center, a light emitting part configured to transmit a light signal to the external battery management system, and a controller configured to identify one or more light sensors that receive the light signal among the plurality of light sensors and inspect a communication status with the external battery management system based on an identified result.

Specific details of other example embodiments are included in the detailed description and drawings.

### Effects of the Invention

According to the example embodiments, with a method of inspecting the communication status of battery management systems, it is possible to determine whether the communication status between the battery management system and the external battery management system is a poor status, to determine whether the poor status is due to signal intensity between the battery management systems or a problem with the arrangement status between the battery management systems, and to determine an appropriate operation to take.

According to the example embodiments, it is possible with a method to obtain data from a plurality of light signals as well as a single light signal used for communication between battery management systems, and restore original data with higher accuracy than wireless communication using a single light signal.

Effects of the present disclosure are not limited to those described above, and other effects may be made apparent to those skilled in the art from the following description.

### Brief Description of Drawings

FIG. 1 is a drawing for explaining the concept of a system that performs communication between battery management systems according to an example embodiment.
FIG. 2a and FIG. 2b are drawings for explaining the overall concept of a method for inspecting communication status between battery management systems according to an example embodiment.
FIG. 3 is a flowchart illustrating a method for inspecting communication status according to an example embodiment.
FIG. 4 is an example diagram for explaining the status of a light receiving part in a method for inspecting communication status according to an example embodiment.
FIG. 5 is a flowchart to explain processing a light signal received from a plurality of light sensors in a method for inspecting communication status according to an example embodiment.
FIG. 6 illustrates a block diagram of a battery management system according to an example embodiment.

### Mode for Carrying Out the Invention

Terms used in the example embodiments are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising or including" a component, it does not exclude another component but may further include another component unless otherwise stated.

Expression "at least one of a, b and c" described throughout the specification may include "a alone," "b alone," "c alone," "a and b," "a and c," "b and c" or "all of a, b and c."

In the present disclosure, a "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring portability and mobility, and include (but is not limited to) any type of handheld wireless communication device, for example, a tablet PC, a smartphone, a communication-based terminal such as international mobile telecommunication (IMT), code division multiple access (CDMA), W-code division multiple access (W-CDMA), long term evolution (LTE), or the like.

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

Hereinafter, example embodiments will be described in detail with reference to the drawings.

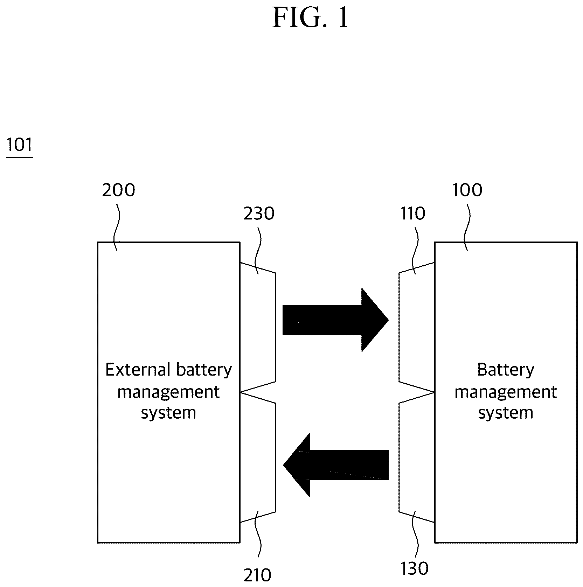

FIG. 1 is a drawing for explaining the concept of a system that performs a method for inspecting communication status between battery management systems according to an example embodiment.

Referring to FIG. 1, a system 101 for performing a method for inspecting a communication status of a battery management system 100 according to an example embodiment may include the battery management system 100 for inspecting a communication status and an external battery management system 200 that communicates with the battery management system 100.

The present disclosure is to maintain the communication status of the battery management system 100 and the external battery management system 200. More specifically, a light emitting part 130 of the battery management system 100 according to the present disclosure may transmit a light signal to the external battery management system 200 using one light sensor or a plurality of light sensors. Further, a light receiving part 110 of the battery management system 100 may receive a light signal from the external battery management system 200 using a plurality of light sensors arranged in a symmetric structure centered on a reference point.

Through this, when wireless communication between the battery management system 100 and the external battery management system 200 is performed, it is possible to identify the positions and number of sensors among a plurality of light sensors of the light receiving part 110 of the battery management system 100 to identify whether the arrangement of a light emitting part 230 of the external battery management system 200 and the light receiving part 110 of the battery management system 100 is in a straight line, and wireless communication may be maintained even if the arrangement between the two is not straight and is misaligned. Further, even if the intensity of the light signal emitted from the light emitting part 230 of the external battery management system 200 is weakened, the light receiving part 110 of the battery management system 100 includes a plurality of light sensors, and thus the problem of wireless communication disconnection between the battery management system 100 and the external battery management system 200 may be reduced. Further, the light signal emitted from the light emitting part 230 of the external battery management system 200 is received by the light receiving part 110 of the battery management system 100 through a plurality of light sensors, not a single light sensor, and thus the average value of multiple light signals may be used to restore data and the accuracy of data restored from the light signals may be increased.

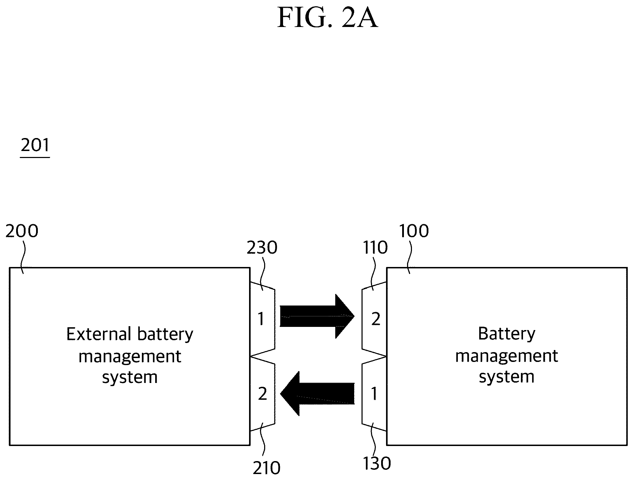

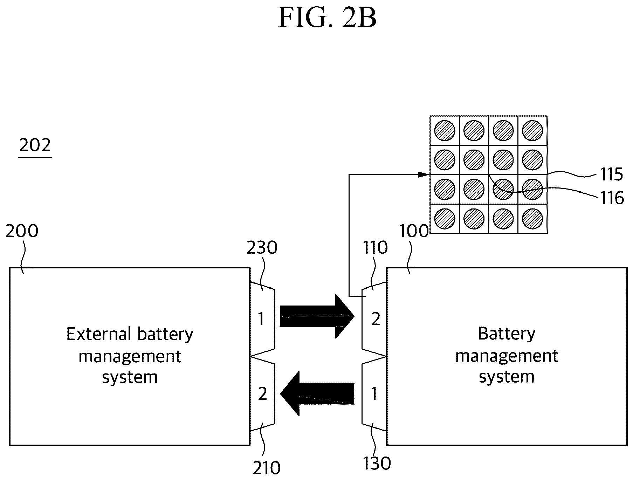

FIG. 2a and FIG. 2b are drawings for explaining the overall concept of a method for inspecting communication status between battery management systems according to an example embodiment.

Referring to FIG. 2a, identified is a method 201 by which communication between conventional battery management systems takes place. According to the method 201 of the existing technology, in most cases, the light receiving part 110 of the battery management system 100 consists of a single light sensor. There are cases in which, when a light signal is transmitted from the light emitting part 230 of the external battery management system 200 and reaches the light receiving part 110 of the battery management system 100, if the arrangement of the light emitting part 230 of the external battery management system 200 and the light receiving part 110 of the battery management system 100 is not in a straight line, the transmission of light signals is not performed properly. Further, when the signal intensity of the light signal transmitted from the light emitting part 230 of the external battery management system 200 becomes weak, it is also difficult to identify a response thereto and the cause of the communication failure. Further, when the light receiving part 110 uses a single light sensor, there is a problem that the accuracy of data transmission may be reduced based on a single light signal.

Referring to FIG. 2b, identified is a method 202 by which communication status between battery management systems is inspected according to an example embodiment.

In the method 202 according to the example embodiment, identified are one or more light sensors that receive a light signal among a plurality of light sensors 115 through the light receiving part 110 of the battery management system 100 including the plurality of light sensors 115 arranged in a symmetric structure having a reference point 116 as a center. Further, depending on the arrangement status of the plurality of light sensors 115 arranged in the symmetric structure, identified is whether the communication status between the battery management system 100 and the external battery management system 200 is normal, and when the communication status between the battery management system 100 and the external battery management system 200 is poor, identified is why the communication status became poor. Further, operations needed to address the cause of the poor status are identified.

Further, when a light signal transmitted from the light emitting part 230 of the external battery management system 200 is received by the light receiving part 110 of the battery management system 100 including the plurality of light sensors 115, one or more light sensors included in the plurality of light sensors 115 may react to generate multiple identical light signals (e.g., analog signals). The battery management system 100 may obtain one average value by averaging multiple received analog signals, and accordingly, by analyzing communication information, it may be possible to restore data with higher accuracy than when using a single light sensor.

In the present disclosure, a light receiving part 210 of the external battery management system 200 receives a light signal through the light emitting part 130 of the battery management system 100, and thus the structure of the light receiving part 210 of the external battery management system 200 may also include a plurality of light sensors arranged in a symmetric structure centered on a specific reference point, similar to the structure of the light receiving part 110 of the battery management system 100 described above. Based on the symmetric relationship between the battery management system 100 and the external battery management system 200, in the present disclosure, the battery management system 100 is described as a standard.

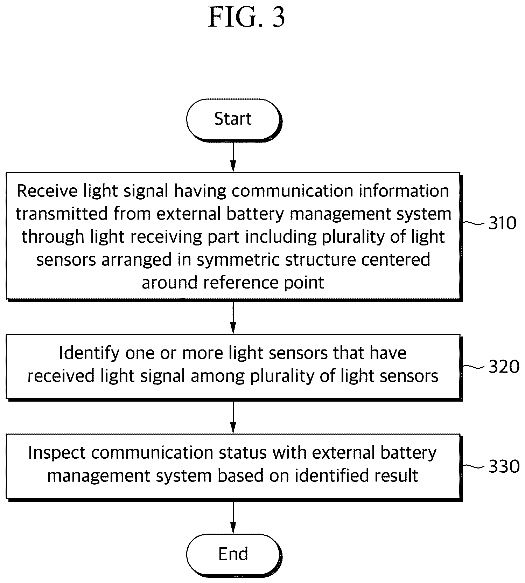

FIG. 3 is a flowchart illustrating a method for inspecting communication status according to an example embodiment.

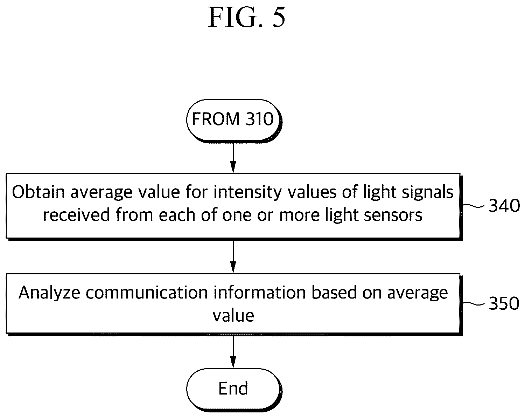

Referring to FIG. 3, in operation 310, according to an example embodiment, the battery management system 100 may receive a light signal having communication information transmitted from the external battery management system 200 through the light receiving part 110 including the plurality of light sensors 115 arranged in a symmetric structure centered around the reference point 116. Here, the battery management system 100 may obtain light signals from one or more light sensors included in the plurality of light sensors 115, and the type of the light signal may be analog. Further, the battery management system 100 may restore data more precisely based on the values of all obtained light signals, and this is described in detail with reference to FIG. 5.

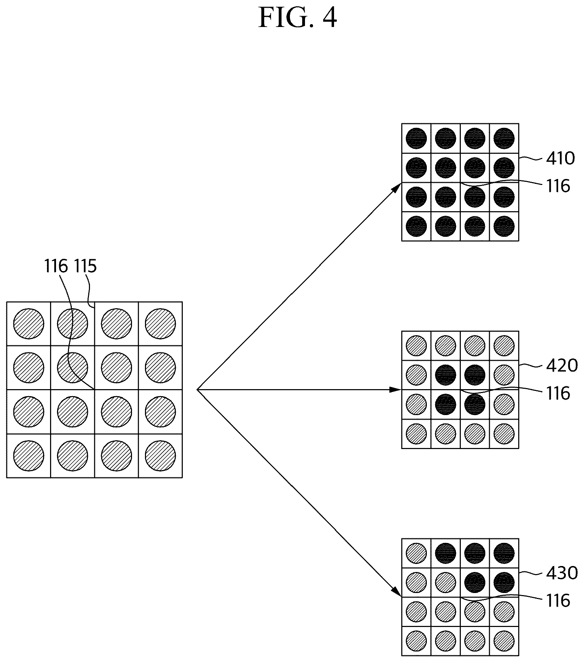

In operation 320, the battery management system 100 according to an example embodiment may identify one or more light sensors that have received a light signal among the plurality of light sensors 115. For example, the battery management system 100 may detect one or more light sensors that have received a light signal, and identify the arrangement relationship of one or more light sensors. For example, the battery management system 100 may identify that the plurality of light sensors 115 have all received a light signal, or may identify that only some of the plurality of light sensors 115 received a light signal. Various cases for this are described in detail with reference to FIG. 4 below.

In operation 330, based on the identified result, the management system 100 according to an example embodiment may inspect a communication status with the external battery management system 200. Based on the inspected communication status, except the case where the communication status between the battery management system 100 and the external battery management system 200 is determined as a normal status, the battery management system 100 may provide a notification if it is determined that the communication status is a poor communication status due to some reason, and provide information on appropriate operations to take. For example, when it is determined that the communication status is poor, the battery management system 100 may provide a notification via sound or light, and may also provide the notification to an electronic control unit or an external server.

FIG. 4 is an example diagram for explaining the status of a light receiving part in a method for inspecting communication status according to an example embodiment.

Referring to FIG. 4, identified are the plurality of light sensors 115 arranged in a symmetric structure having the reference point 116 as the center. FIG. 4 illustrates the 4 X 4 square structure centered around the reference point 116 as an example embodiment of the plurality of light sensors 115, but the structure of the plurality of light sensors 115 is not limited to the example embodiment, and the structure of the plurality of light sensors 115 may have, for example, a square structure or a circular structure of a size greater than 2 X 2.

For example, referring to a signal input status 410, the signal input status 410 may correspond to a case where all light sensors included in the plurality of light sensors 115 that received a light signal from the external battery management system 200 received a light signal. In this case, as described with respect to operation 320 of FIG. 3, the battery management system 100 may identify that all of the plurality of light sensors 115 received a light signal, and determine that the communication status between the battery management system 100 and the external battery management system 200 is normal status.

For example, referring to a signal input status 420, the signal input status 420 may correspond to a case where a signal is received from one or more light sensors less than the number of all light sensors that received the light signal from the external battery management system 200 among light sensors included in the plurality of light sensors 115, and may correspond to a case where the arrangement status of one or more light sensors receiving the signal is symmetrical around the reference point 116. In this case, as described with respect to operation 320 of FIG. 3, the battery management system 100 may identify that some of the plurality of light sensors 115 received a light signal, and the arrangement status of some of the plurality of light sensors 115 is symmetrical with respect to the reference point 116. This may be the case that the light emitting part 230 of the external battery management system 200 that transmits the light signal and the light receiving part 110 of the battery management system 100 that receives the light signal are positioned in a straight line centered on the reference point 116, but the intensity of the light signal is not strong enough for all of the light sensors 115 that received the light signal to receive the light signal. Accordingly, the battery management system 100 may determine that the communication status between the battery management system 100 and the external battery management system 200 is the status that the signal intensity is poor. Further, the battery management system 100 may transmit the notification on the communication status and control information including information on adjusting light signal intensity between the battery management system 100 and the external battery management system 200 and information on adjusting the distance between the battery management system 100 and the external battery management system 200. Through this, the battery management system 100 may provide opportunities for maintenance and management of communication systems before a communication failure occurs between the battery management system 100 and the external battery management system 200.

For example, referring to a signal input status 430, the signal input status 430 may correspond to the case where a signal was received from one or more light sensors less than the number of all light sensors that received a light signal from the external battery management system 200 among light sensors included in the plurality of light sensors 115, and the arrangement status of one or more light sensors that received the signal is asymmetrical with respect to the reference point 116. In this case, as described with respect to operation 320 with reference to FIG. 3, the battery management system 100 may identify that some of the plurality of light sensors 115 received a light signal, and the arrangement status of some of the plurality of light sensors 115 is asymmetric with respect to the reference point 116. This indicates that the light emitting part 230 of the external battery management system 200 that transmits a signal and the light receiving part 110 of the battery management system 100 that receives a light signal are not located on a straight line centered on the reference point 116, and this may be due to poor alignment status between the battery management system 100 and the external battery management system 200. Accordingly, the battery management system 100 may determine that the communication status between the battery management system 100 and the external battery management system 200 is poor. Further, the battery management system 100 may transmit the notification on the communication status and the control information including information on adjusting the angle between the light receiving part 110 of the battery management system 100 and the light emitting part 230 of the external battery management system 200. Through this, the battery management system 100 may provide an opportunity to reconfigure the battery management system 100 and the external battery management system 200.

FIG. 5 is a flowchart to explain processing a light signal received from a plurality of light sensors in a method for inspecting communication status according to an example embodiment.

Referring to FIG. 5, in operation 310, according to an example embodiment, the battery management system 100 may obtain an average value for the intensity values of light signals received from each of one or more light sensors in operation 340 after receiving a light signal. Through this, unlike the case where the accuracy of converting a light signal received through a single light sensor in the light receiving part 110 may be reduced due to noise, communication distance, external obstacles and so on, the battery management system 100 may obtain data with higher conversion accuracy by restoring data using a single average value for the intensity values of the light signals received from each light sensor. In operation 320 that is after receiving the light signal in operation 310 that is described with reference to FIG. 3, the battery management system 100 may perform operation 340 together with operation 320 that is identifying one or more light sensors that received the light signal. Further, the battery management system 100 may perform operation 340 before or after operation 320. However, example embodiments of the present disclosure are not limited to the example embodiments described above.

In operation 320, the battery management system 100 according to an example embodiment may analyze communication information based on an average value. Here, analyzing the communication information may include converting the type of the received light signal from an analog signal type to a digital signal type (analog to digital convert, ADC). After then, the battery management system 100 may convert a digital light signal into an analog signal (digital to analog convert, DAC) before transmitting the light signal to the external battery management system 200, and transmit the light signal to the external battery management system 200.

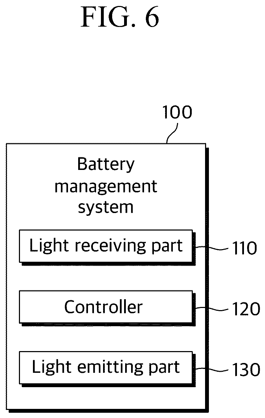

FIG. 6 illustrates a block diagram of a battery management system according to an example embodiment.

Referring to FIG. 6, the battery management system 100 may include a light receiving part 110 configured to receive a light signal including communication information transmitted from the external battery management system 200 through a plurality of light sensors arranged in a symmetric structure having a reference point as a center, a light emitting part 130 configured to transmit a light signal to the external battery management system 200, and a controller 120 that is configured to identify one or more light sensors that receive the light signal among the plurality of light sensors and inspect a communication status with the external battery management system 200 based on an identified result. The battery management system 100 illustrated in FIG. 6 includes only components related to the present example embodiment. Therefore, it will be understood by those skilled in the art related to the present disclosure that other general components may be included in addition to the components illustrated in FIG. 6.

In an example embodiment, the light receiving part 110 may receive a light signal having communication information transmitted from an external battery management system through a plurality of light sensors arranged in a symmetric structure centered around a reference point. Each of the light sensors included in the light receiving part 110 may correspond to a photodiode, which is a semiconductor diode having the same function as a light detector, for example. Since the photodiode has a PN junction or PIN structure, when light of sufficient photon energy strikes the photodiode, photocurrent may be generated by electronic activity through the creation of mobile electrons and positively charged holes.

In an example embodiment, the light emitting part 130 may transmit a light signal having the communication information to the external battery management system 200. Similar to the light receiving part 110 described above, the light emitting part 130 may include one or more light sensors corresponding to semiconductor diodes having the same function as a light detector.

In an example embodiment, a controller 120 may be configured to identify one or more light sensors that received a light signal among a plurality of light sensors, and inspect a communication status with respect to an external battery management system based on an identified result. For example, when a light signal is received from all of the plurality of light sensors, the controller 120 may control the battery management system 100 to determine that the communication status between the battery management system and the external battery management system is normal status. For example, when a signal is received from one or more light sensors less than the number of all light sensors among the plurality of light sensors and the arrangement status of one or more light sensors is symmetrical about the reference point, the controller 120 may control the battery management system 100 to determine that the communication status between the battery management system and the external battery management system is the status that the signal intensity is poor. For example, the controller 120 may control the battery management system 100 to transmit control information including a notification on the communication status. Here, the control information may include information on adjusting the light signal intensity between the battery management system and the external battery management system, and information on adjusting the distance between the battery management system and the external battery management system. For example, when a signal is received from one or more light sensors less than the number of all light sensors among the plurality of light sensors and the arrangement status of one or more light sensors is symmetrical having the reference point as the center, the controller 120 may control the battery management system 100 to determine that the communication status between the battery management system and the external battery management system is the status that the signal intensity is poor. For example, the controller 120 may control the battery management system 100 to transmit the control information including the notification on the communication status. Here, the control information may include the information on adjusting the light signal intensity between the battery management system and the external battery management system, and the information on adjusting the distance between the battery management system and the external battery management system. For example, when a signal is received from one or more light sensors among the plurality of light sensors and the arrangement status of one or more light sensors is asymmetrical with the reference point as the center, the controller 120 may control the battery management system 100 to determine that the communication status between the battery management system and the external battery management system is the status that arrangement is poor. For example, the controller 120 may control the battery management system 100 to transmit the control information including the notification on the communication status. Here, the control information may include the information on adjusting the angle between the light receiving part of the battery management system and the light emitting part of the external battery management system. Further, the controller 120 may control the battery management system 100 to obtain an average value for the intensity values of light signals received from each of one or more light sensors, and analyze communication information based on the average value. Here, the controller 120 may control the battery management system 100 to analyze the communication status through operation of converting the type of light signals from an analog signal type to a digital signal type.

The electronic device according to the above-described example embodiments may include a processor, a memory for storing and executing program data, a permanent storage such as a disk drive, and/or a user interface device such as a communication port, a touch panel, a key and/or a button that communicates with an external device. Methods implemented as software modules or algorithms may be stored in a computer-readable recording medium as computer-readable codes or program instructions executable on the processor. Here, the computer-readable recording medium includes a magnetic storage medium (for example, ROMs, RAMs, floppy disks and hard disks) and an optically readable medium (for example, CD-ROMs and DVDs). The computer-readable recording medium may be distributed among network-connected computer systems, so that the computer-readable codes may be stored and executed in a distributed manner. The medium may be readable by a computer, stored in a memory, and executed on a processer.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic and/or look-up table, that may execute various functions by the control of one or more microprocessors or other control devices. Similar to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means" and "configuration" may be used broadly and are not limited to mechanical and physical elements. The terms may include the meaning of a series of routines of software in association with a processor or the like.

The above-described example embodiments are merely examples, and other embodiments may be implemented within the scope of the claims to be described later.

## Claims

1. A method of inspecting a communication status of a battery management system that communicates with an external battery management system, the method comprising:
receiving a light signal comprising communication information transmitted from the external battery management system through a light receiving part comprising a plurality of light sensors arranged in a symmetric structure having a reference point as a center;
identifying one or more light sensors that receive the light signal among the plurality of light sensors; and
inspecting a communication status with the external battery management system based on an identified result.

2. The method of claim 1, wherein inspecting the communication status comprises,
when the light signal is received from all of the plurality of light sensors, determining that the communication status of the battery management system and the external battery management system is normal status.

3. The method of claim 1, wherein inspecting the communication status comprises,
among the plurality of light sensors, when a signal is received from one or more light sensors less than a number of all of light sensors, and when an arrangement status of the one or more light sensors is symmetrical around the reference point,
determining that a communication status between the battery management system and the external battery management system is a status that a signal intensity is poor.

4. The method of claim 3, further comprising transmitting control information comprising a notification on the communication status,
wherein the control information comprises information on adjusting light signal intensity between the battery management system and the external battery management system and information on adjusting a distance between the battery management system and the external battery management system.

5. The method of claim 1, wherein inspecting the communication status comprises,
when a signal is received from one or more light sensors among the plurality of light sensors, and when an arrangement status of the one or more light sensors is asymmetrical around the reference point,
determining that a communication status between the battery management system and the external battery management system is a status that arrangement is poor.

6. The method of claim 5, further comprising transmitting control information comprising a notification on the communication status,
wherein the control information comprises information on adjusting an angle between a light receiving part of the battery management system and a light emitting part of the external battery management system.

7. The method of claim 1, further comprising:
obtaining an average value for intensity values of light signals received from each of the one or more light sensors; and
analyzing the communication information based on the average value.

8. The method of claim 7, wherein analyzing the communication information comprises converting a type of the light signals from an analog signal type to a digital signal type.

9. A non-transitory computer-readable recording medium having a program for executing the method of any one of claim 1 to claim 8 on a server.

10. An electronic apparatus that performs a method of inspecting a communication status of a battery management system that communicates with an external battery management system, comprising:
a light receiving part configured to receive a light signal comprising communication information transmitted from the external battery management system through a plurality of light sensors arranged in a symmetric structure having a reference point as a center;
a light emitting part configured to transmit a light signal to the external battery management system; and
a controller configured to:
identify one or more light sensors that receive the light signal among the plurality of light sensors; and
inspect a communication status with the external battery management system based on an identified result.
